# EUROPÄISCHE PATENTSCHRIFT

(11) **EP 0 857 369 B1**
(45) Veröffentlichungstag und Bekanntmachung des Hinweises auf die Patenterteilung: **26.04.2000**
(21) Anmeldenummer: 96945823.1
(22) Anmeldetag: 23.10.1996
(51) Int. Cl.: H02J 7/00

(54) **VORRICHTUNG ZUR PUFFERUNG DER GLEICHSPANNUNG AM AUSGANG EINER STROMVERSORGUNG**
DIRECT VOLTAGE BACK-UP SYSTEM AT A POWER SUPPLY OUTLET
DISPOSITIF D'ALIMENTATION DE SECOURS EN TENSION CONTINUE A LA SORTIE D'UN SYSTEME D'ALIMENTATION EN COURANT

(30) Priorität: 26.10.1995 DE 19539928
(43) Veröffentlichungstag der Anmeldung: 12.08.1998
(73) Patentinhaber: SIEMENS AKTIENGESELLSCHAFT, 80333 München (DE)
(72) Erfinder: GEHRE, Hans-Joachim, D-09119 Chemnitz (DE); WINTERSTEIN, Frank, D-90471 Nürnberg (DE)
(86) Internationale Anmeldenummer: DE9602011
(87) Internationale Veröffentlichungsnummer: WO9715976

(56) Entgegenhaltungen:
- EP-A- 0 460 888
- WO-A-88/00896
- DE-A- 4 340 350
- GB-A- 2 241 394
- PATENT ABSTRACTS OF JAPAN vol. 095, no. 004, 31.Mai 1995 & JP 07 007872 A (SANYO ELECTRIC WORKS LTD), 10.Januar 1995,
- PATENT ABSTRACTS OF JAPAN vol. 095, no. 002, 31.März 1995 & JP 06 319236 A (TOSHIBA CORP), 15.November 1994,

## Beschreibung

Bei der Speisung von Verbrauchern über eine netzbetriebene Stromversorgung werden üblicherweise Vorkehrungen für den Fall getroffen, daß das die Stromversorgung treibende Netz kurzzeitig ausfällt. Bei einem derartigen Netz handelt es sich in der Regel um ein Wechselspannungsnetz. Es kann sich aber auch um ein Gleichspannungsnetz handeln.

Der Ausfall des speisenden Netzes oder das Absinken von dessen Spannung unter einen bestimmten Wert wird am Eingang der Stromversorgung in der Regel von speziellen Erfassungseinrichtungen erkannt und gemeldet. Diese schalten dann z.B. eine Batterie mittels eines Relais oder eines Halbleiterschalters auf die Verbraucher zu. Sobald das speisende Netz einen bestimmten Spannungswert wieder erreicht hat, wird der Schalter wieder geöffnet. Desweiteren sollen Stromversorgungen häufig so ausgelegt sein, daß diese eine vom speisenden Netz am Eingang sicher getrennte Ausgangsgleichspannung bereitstellen. Dies ist insbesondere dann der Fall, wenn es sich bei dem Netz um ein 400V bzw. 230V Wechselspannungsnetz handelt. Dabei kann es notwendig sein, daß die Stromversorgung eine sogenannte SELV-Gleichspannung nach EN 60950 (EN: Europa Norm) z.B. mit einem Wert von 24V abgibt (SELV: Safety Extra Low Voltage).

In einem derartigen Fall müssen von der Erfassungseinrichtung für die auf der Netzeingangsseite überwachte Spannung ebenfalls die Anforderungen an eine sichere Trennung erfüllt werden. Dies ist nachteilig, da die hierfür u.a. erforderlichen große Luft- und Kriechstrecken einen erhöhten Kosten- und Platzaufwand und entsprechend aufwendige Bauteile erfordern.

Ein weiterer Nachteil der direkten Erfassung der speisenden Netzspannung auf der Eingangsseite der Stromversorgung wird darin gesehen, daß bei einem Ausfall der Stromversorgung selbst die Batterie nicht zugeschaltet wird, weil die Erfassungseinrichtung hierin aufgrund der unverändert vorhandenen Netzspannung keinen Fehlerfall erkennt. Aufgrund der hohen Belastung mit Strom, Spannung und Temperatur zählen aber Stromversorgungen zu den besonders stark beanspruchten Geräten und fallen deshalb in der Regel früher aus als die meisten davon versorgten Verbraucher. Von derartigen Vorrichtungen wird somit nicht erkannt, wenn beispielsweise die Ansteuerung der Primärtransistoren ausfällt, wenn die Stromversorgung vorübergehend nicht hochläuft oder wenn sich irgendein Bauteil oder eine Verbindung im Primär- oder Sekundärkreis geöffnet hat. Lediglich in dem besonders gravierenden Falle, daß die Stromversorgung durch einen Primärkurzschluß ausfällt und als Folge davon ein vorgeschalteter Sicherungsautomat das speisende Netz abtrennt, wird die Batterie zugeschaltet.

Ein weiteres Problem besteht darin, daß viele Verbraucher auf der Gleichstromseite z.B. beim Zuschalten hohe Anlaufströme benötigen, z.B. Glühlampen, DC/DC-Wandler, Kondensatoren, Gleichstrommotoren, Schaltschütze mit DC- Sparwicklung u.dgl.. Manche Stromversorgungen schalten bei Überlast sofort ab. Dies ist nachteilig, da eine schlagartige, vollständige Unterbrechung der Versorgung des Verbrauchers auftritt. Andere Stromversorgungen besitzen eine automatische Strombegrenzung, wodurch die Ausgangsspannung gemäß dem ohmschen Gesetz U = R_{Last} x I_{Stromegrenzung} zusammenbricht. In diesem Fall werden die Verbraucher für die Zeitdauer des durch hohe Anlaufströme bedingten Spannungseinbruchs unvorteilhaft mit unzulässig niedriger Spannung versorgt.

Eine Wiederkehr der Ausgangsgleichspannung der Stromversorgung unabhängig von der Netzeingangsspannung kann bei bekannten Schaltungen durch eine Diode erkannt werden, welche in der das positive Potential tragenden Ausgangsleitung zwischen Stromversorgung und Verbraucher geschaltet ist. An der Kathode dieser Diode liegt die Verbraucherspannung an, z.B. 24 V Ausgangsgleichspannung der Stromversorgung abzüglich der Durchlaßspannung der Diode V1 bei abgeschalteter Batterie bzw. die Batteriespannung bei zugeschalteter Batterie. An der Anode der Diode kann die tatsächliche Ausgangsgleichspannung der Stromversorgung erfaßt werden. Liefert die Stromversorgung keine Ausgangsspannung, so beträgt die Spannung an der Anode der Diode nahezu 0 Volt. Hieraus kann eine Steuersignal abgeleitet werden, welches die Zuschaltung der Batterie aufrechterhält. Steigt die Spannung an der Anode über einen vorgebbaren Wert, wird die Batterie wieder von den Verbrauchern weggeschaltet, damit diese nicht unnötig entladen wird. Die Diode ermöglicht somit im stationären Fall eine sichere Unterscheidung, ob die Gleichspannung am Verbraucher von der Stromversorgung oder der Batterie bereitgestellt wird. Der Einsatz einer derartigen Diode hat den Nachteil, daß ein die Ausgangsgleichspannung herabsetzender Spannungsabfall von ca. 1 Volt, eine hohe Verlustleistung und ein erhöhter Platzaufwand für einen großen Kühlkörper auftritt.

Demgegenüber liegt der Erfindung die Aufgabe zugrunde, eine universellere Vorrichtung zur Pufferung der Gleichspannung am Ausgang einer Stromversorgung anzugeben, welche zum einen ohne großen Aufwand aufzubauen ist, und die zum anderen auch bei einem Ausfall der Stromversorgung selbst bzw. bei einer ausgangsseitigen Überlastungen der Stromversorgung eine Pufferung der Ausgangsgleichspannung bewirkt.

Die Aufgabe wird gelöst mit der im Anspruch 1 angegebenen Vorrichtung. Vorteilhafte weitere Ausführungsformen derselben sind in den Unteransprüchen angegeben.

Die Erfindung wird anhand der in den nachfolgend kurz angeführten Figuren dargestellten Ausführungsbeispiele näher erläutert. Dabei zeigt
- Fig. 1:: ein Blockschaltbild der erfindungsgemäßen Vorrichtung,
- Fig. 2a und 2b :: den Verlauf der wesentlichen Spannungen der erfindungsgemäße Vorrichtung während eines Puffervorgangs am Beispiel einer Stromversorgung, welche eine interne Hilfsspannungsversorgung für den Regler der Ausgangsgleichspannung aufweist, und
- Fig. 3a, 3b und 3c :: den Verlauf der wesentlichen Spannungen der erfindungsgemäße Vorrichtung während eines Puffervorgangs am Beispiel einer Stromversorgung, welche einen Speicherkondensator zur Hilfsspannungsversorgung für den Hochlauf des Reglers der Ausgangsgleichspannung aufweist.

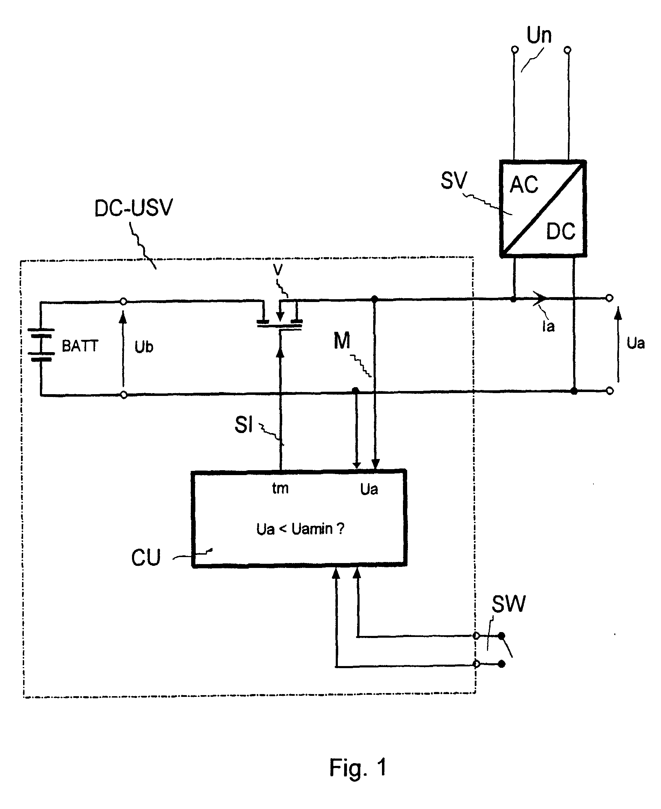

Die erfindungsgemäße Vorrichtung, welche im Blockschaltbild von Figur 1 mit dem Bezugszeichen DC-USV gekennzeichnet ist, dient zur Pufferung einer Gleichspannung Ua am Ausgang einer Stromversorgung SV. Diese wird im Beispiel der Figur 1 netzseitig von einer Wechselspannung Un gespeist, so daß die Stromversorgung SV ein sogenanntes AC-DC Modul darstellt. Bei einer anderen, nicht dargestellten Ausführung kann die Stromversorgung auch von einer Netzgleichspannung gespeist werden.

Die erfindungsgemäße Vorrichtung enthält mindestens eine Pufferbatterie BATT. Dabei kann es sich auch um einen über die Stromversorgung SV selbst aufladbaren Akkumulator handeln. In einem solchen Fall sind zusätzlich Mittel zur geordneten Aufladung des Akkumulators vorhanden, welche z.B. eine Ladestrombegrenzung bewirken. Diese sind aus Gründen der Übersichtlichkeit in Figur 1 nicht dargestellt, und können auch in der dortigen Steuereinheit CU integriert sein.

Gemäß der Erfindung schaltet die Steuereinheit CU die Pufferbatterie BATT zu, wenn der Istwert der Gleichspannung Ua kleiner als ein vorgegebener Minimalwert Uamin ist. Dieser Vergleich wird durch die Steuereinheit CU vorgenommen. Fällt dieser Vergleich positiv aus, d.h. muß eine Stützung der Ausgangsgleichspannung Ua vorgenommen werden, so wird die Batterie BATT bevorzugt durch Ansteuerung eines elektronischen Schaltelements V über ein von der Steuereinheit CU abgegebenes Schaltsignal SI zugeschaltet. Die Ausgangsgleichspannung Ua wird dann von der Batterie gestützt und nimmt den Wert der aktuell verfügbaren Batteriespannung Ub an.

Gleichzeitig mit Zuschaltung der Batterie BATT wird in der Steuereinheit ein vorgegebener Pufferzeitraum tm generiert. Vorteilhaft wird die Dauer des Pufferzeitraumes kurz ausgewählt, bevorzugt in der Größenordnung von Sekunden, z.B. mit einem Wert tm = 1 sec. Nach Ablauf des Pufferzeitraumes wird die Pufferbatterie BATT zunächst zwangsweise wieder abgeschaltet. Unterschreitet daraufhin die Ausgangsgleichspannung erneut den vorgegebenen Minimalwert Uamin, so stellt sich eine Folge von derartigen Zuschalt- und Abschaltzyklen ein, bis sich auf Grund einer Wiederkehr der Ausgangsgleichspannung Ua keine weiteren Unterschreitungen des vorgegebenen Minimalwertes Uamin der Ausgangsgleichspannung mehr ereignen und folglich auch keine weiteren Batteriezuschaltzyklen mehr generiert werden. Die Wiederkehr der Ausgangsgleichspannung Ua kann z.B. durch eine Wiederkehr des speisenden Netzes oder dem Verschwinden einer sperrenden Bedingung im Inneren der Stromversorgung selbst hervorgerufen werden.

Bei einem praktischen Beispiel beträgt der Wert der direkt überwachten Ausgangsgleichspannung Ua der Stromversorgung SV +24V DC. In diesem Fall kann der Minimalwert Uamin vorteilhaft auf +23V DC vorgegeben werden. Fällt somit der Wert der Ausgangsgleichspannung Ua, aus welchen Gründen auch immer, um 1V auf unter 23V, so schaltet die DC-USV Puffervorrichtung die davon zuvor geladene Batterie BATT praktisch sofort elektronisch auf den Ausgang zu. Die an einem Verbraucher am Ausgang auftretende minimale Spannung fällt somit praktisch nicht unter den vorgegebenen minimalen Spannungswert von z.B. 23V DC, welcher noch erheblich oberhalb der etwa bei 18,5 V liegenden theoretischen Grenze für Unterspannung liegt. Es ist vorteilhaft, wenn die Pufferbatterie BATT eine Leerlaufspannung Ub aufweist, welche größer als der Nennwert Uanenn der Gleichspannung Ua ist. Bei einem Nennwert von +24V für die Ausgangsgleichspannung Ua der Stromversorgung SV wird diese Bedingung z.B. von einer Pufferbatterie mit einer Leerlaufspannung von etwa 27,3 V erfüllt.

Eine mögliche Wiederkehr der Ausgangsspannung der Stromversorgung kann dadurch erkannt werden, daß gemäß der Erfindung die Batterie BATT von der Puffervorrichtung DC-USV mit Ablauf eines jeden Pufferzeitraumes tm, welche bevorzugt die Dauer von etwa 1 Sekunde haben, zyklisch abgeschaltet wird. In einer derartigen Pause zwischen zwei Pufferzeiträumen tm wird der Istwert der am Verbraucher anliegende Gleichspannung Ua gemessen. Wenn die Stromversorgung noch keine Spannung liefert, wird die den Wert der Batteriespannung aufweisende Ausgangsgleichspannung Ua während die Abschaltphase innerhalb kurzer Zeit bis auf den vorgebbaren minimalen Spannungswert von z.B. 23V DC fallen. Die Puffervorrichtung DC-USV schaltet dann die Batterie automatisch wieder auf die Verbraucher zu und ein weiterer Pufferzeitraum tm läuft ab. Kehrt dagegen die Ausgangsspannung der Stromversorgung während des Ablaufes eines Pufferzeitraumes tm zurück, so wird nach Abschaltung der Batterie mit Auflauf des Pufferzeitraumes der minimale Spannungswert Uamin nicht mehr unterschritten. Die Ausgangsspannung Ua wird von der Stromversorgung dann in der Regel auf der Höhe des Nennwertes Uanenn stabil gehalten, die Batterie nicht mehr zugeschaltet und gegebenenfalls von der Stromversorgung SV wieder aufgeladen.

Die erfindungsgemäße Vorrichtung ist auch voll funktionsfähig, wenn der Ausfall der Ausgangsgleichspannung der Stromversorgung durch einen Wegfall einer speisenden Eingangswechselspannung verursacht wurde. In diesem Fall erfaßt ein Regler im Inneren der Stromversorgung, welcher im Normalbetrieb die Aufgabe hat, die Ausgangsgleichspannung konstant zu halten, nach der Wiederkehr der Eingangswechselspannung während einer Pausenzeit nach Ablauf eines Pufferzeitraumes tm den Istwert der Ausgangsgleichspannung Ua, der unter dem Sollwert liegt. Eine derartige geregelte Stromversorgung läuft dann bei Wiederkehr der speisenden Eingangsspannung automatisch wieder hoch.

In vielen Fällen weist die netzbetriebene Stromversorgung SV einen Kondensator am Gleichspannungsausgang DC auf, der während eines Pufferzeitraumes tm von der Pufferbatterie BATT aufgeladen wird. In einer Pausenzeit im Anschluß an den Ablauf eines Pufferzeitraumes wird dieser gemäß Q = I x t = C x U mit du/dt = I_{Laststrom} / C entladen. Bei Vorliegen eines Ausfalls der Ausgangsgleichspannung Ua fällt somit die gepufferte Spannung Ua nach Ablauf eines der zyklisch aufeinanderfolgenden Pufferzeiträume nicht schlagartig ab, sondern klingt mit einer Zeitkonstante bis zum vorgegebenen Minimalwert Uamin ab. Dies hat den Vorteil, daß die Pausenzeiten zwischen den Pufferzeiträumen nicht zu kurz werden und der Verbraucher gegebenenfalls mit unzulässigen Schaltspitzen belastet wird.

Ohne die erfindungsgemäße Vorrichtung ist es nicht ohne weiteres möglich zu erkennen, ob eine insbesondere im Bereich um den Nennwert liegende Ausgangsgleichspannung von einer wiederaktiven Stromversorgung oder von der zugeschalteten Batterie bereitgestellt wird. Die Vorrichtung hat dabei den Vorteil, daß eine Wiederkehr der Ausgangsgleichspannung der Stromversorgung ohne großen Aufwand effektiv erkannt werden kann. Die Batterie kann somit nach Abklingen eines Fehlerfalls. schnell wieder von den Verbrauchern weggeschaltet werden, und wird nicht unnötig entladen. Durch die Erfindung ist es nicht notwendig, z.B. eine Diode im Ausgangskreis für die Gleichspannungserfassung vorzusehen. Die damit verbundenen Nachteile des Auftretens eines Durchlaßspannungsabfalls, einer hohen Verlustleistung und großer Platzaufwendungen für Kühlkörper können vermieden werden.

Die erfindungsgemäße Vorrichtung weist den weiteren Vorteil auf, daß keine kosten- und platzaufwendigen Maßnahmen für eine direkte Erfassung der speisenden Netzspannung am Eingang der Stromversorgung vorgesehen werden müssen. Bei der Erfindung werden die Verbraucher sowohl bei einem Ausfall der speisenden Eingangsspannung, als auch bei einem Ausfall der Stromversorgung selbst weiter versorgt, da die für die Verbraucher wesentliche Ausgangsgleichspannung der Stromversorgung bzw. Verbraucher-Eingangsspannung überwacht wird. Die erfindungsgemäße Vorrichtung kann somit additiv einer Stromversorgung nachgeschaltet werden, ohne daß ein Eingriff in deren Aufbau notwendig ist.

Die erfindungsgemäße Vorrichtung hat den weiteren Vorteil, daß diese auch bei vorübergehenden Einbrüchen der Ausgangsgleichspannung der Stromversorgung, welche beispielsweise durch hohe Einschaltströme von Verbrauchern verursacht werden, die Batterie automatisch als Unterstützung zuschaltet, sobald die Verbraucherspannung unter einen vorgebbaren Minimalwert von z.B. 23V DC fällt. Die Erfindung ermöglicht somit eine quasi fliegende Übernahme bzw. Stützung der Ausgangsgleichspannung in einer Vielzahl von Fehlerfällen. Ferner kann die Batterie bedingt durch die erfindungsgemäße Zwangsabschaltung nach Ablauf eines Pufferzeitraumes in jedem Fall sehr schnell nach Wiederkehr normaler Verhältnisse bei der Ausgangsgleichspannung abgeschaltet werden. Hierdurch wird ein unter Umständen sehr lange anhaltender Parallelbetrieb von Stromversorgung und Batterie vermieden, welcher ansonsten erst durch eine allmähliche Entladung der Batterie nach längerer Zeit beendet werden könnte.

Ferner wird auch im Fall von Verbraucherkurzschlüssen zusätzlicher Strom geliefert, da durch die Überwachung der Ausgangsgleichspannung das Zuschalten der Batterie in jedem Fall erfolgt, sobald diese Spannung unter den vorgegebenen Minimalwert fällt. Hierdurch können zum Zwecke der Selektivität vor die Verbraucher geschaltete Sicherungsautomaten schneller und zuverlässiger ausgelöst werden. Vorteilhaft wird in diesem Fall der Batteriestrom durch eine in die Puffervorrichtung integrierte elektronische Kurzschlußstrombegrenzung auf einen definierten Wert von typisch 120A für t = 20ms begrenzt.

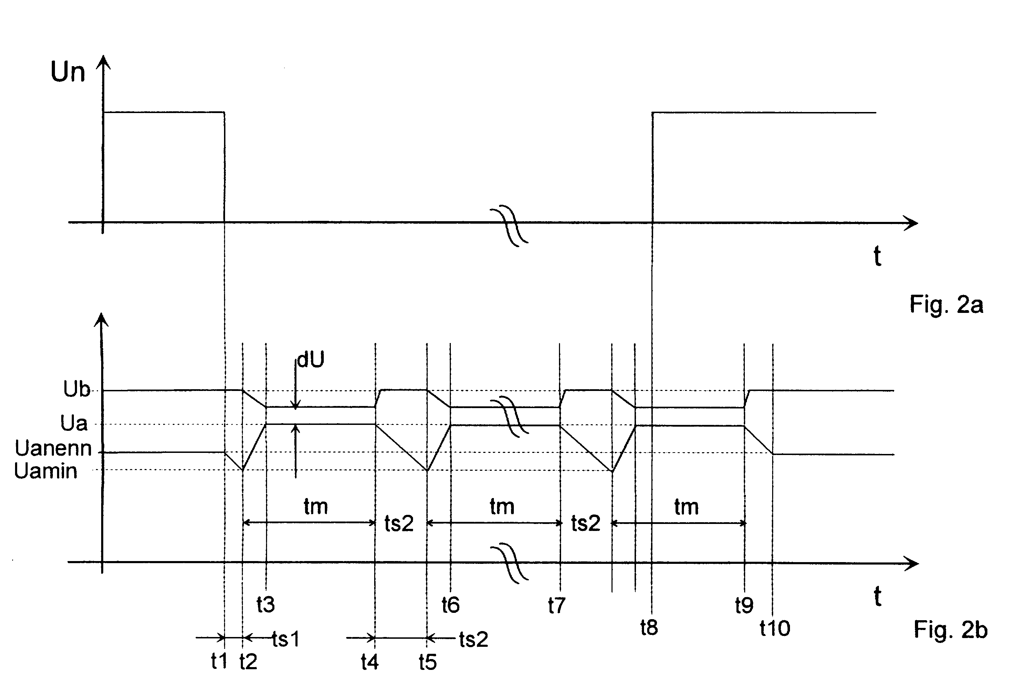

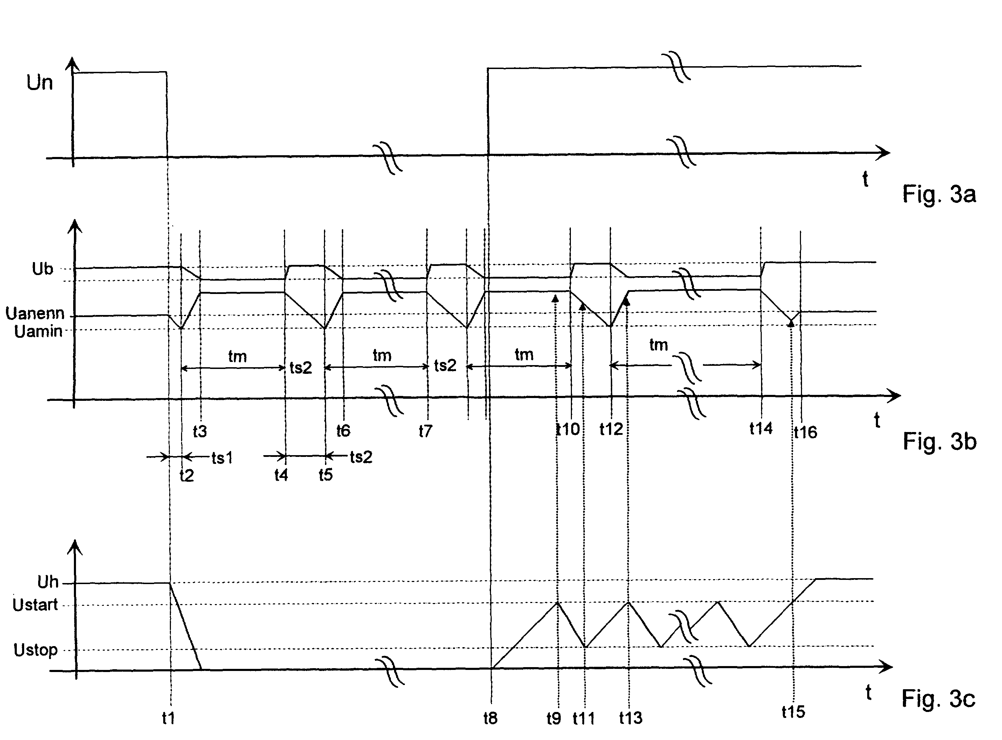

Die Erfindung wird anhand von zwei, in den Figuren 2a, 2b und 3a bis 3c dargestellten Gruppen von Spannungsverläufen weiter erläutert. Dabei können bezüglich des Betriebsverhaltens grundsätzlich zwei Typen von Stromversorgungen SV unterschieden werden.

Bei einem ersten Typ ist der Regler für die Konstanthaltung der Ausgangsgleichspannung mit einer eigenständigen, internen und von der Netzeingangsspannung gespeisten Hilfsspannungsversorgung ausgerüstet. Diese hält den Regler ständig in Bereitschaft, auch wenn die aktuelle Ausgangsspannung Ua durch Zuschalten der Batterie BATT über dem Sollwert Uanenn liegt. Bei Fehlen einer Netzeingangsspannung ist der Regler definiert abgeschaltet.

Bei einem zweiten Typ ist für den Hochlauf des Reglers eine Hilfsversorgung in Form eines Speicherkondensators vorgesehen, mit der für eine bestimmte Zeit Hilfsenergie bereitgestellt wird. Nach erfolgtem Hochlauf wird der Speicherkondensator über einen hochohmigen Widerstand z.B. aus der Netzspannung aufgeladen und der Regler über eine Hilfswicklung des Haupttrafos der Stromversorgung versorgt. Dieser zweite Typ von Stromversorgungen weist den Nachteil auf, daß bei Fehlen einer Eingangsspannung auch keine stabile Energieversorgung für den Regler vorhanden ist. Hierdurch wird in dem Fall, daß die Ausgangsgleichspannung Ua auf Grund einer Zuschaltung der Batterie über dem Sollwert liegt, eine Folge von ständigen, erfolglosen Hochlaufversuchen der Stromversorgung SV verursacht.

Dennoch kann die erfindungsgemäße Vorrichtung an den Ausgang von beiden Typen angekoppelt werden. Bei beiden Typen ist es möglich, die Batterie nach Ablauf des eigentlichen Puffervorgangs, d.h. z.B. nach Beendigung eines Netzausfalls oder nach dem Verschwinden von dynamischen Lastspitzen, mit Hilfe der erfindungsgemäßen Puffervorrichtung schnell und auf einfache und verlustleistungsarme Weise von der Last zu trennen.

Zur weiteren Erläuterung sind in den Figuren 2a, 2b die Verläufe der wesentlichen Spannungen der erfindungsgemäße Vorrichtung während eines Puffervorgangs am Beispiel einer Stromversorgung gezeigt, welche entsprechend dem obigen ersten Typ eine interne Hilfsspannungsversorgung für den Regler der Ausgangsgleichspannung aufweist.

Dabei sei gemäß Figur 2a angenommen, daß das die Stromversorgung speisende Netz im Zeitpunkt t1 ausfällt und im Zeitpunkt t8 wiederkehrt. Auf Grund des Ausfalls in t1 sinkt die Ausgangsgleichspannung Ua gemäß Figur 2b innerhalb eines ersten Stützzeitraumes ts1 von Ua = Uanenn bis auf Uamin, wobei der Spannungsverlauf von der Kapazität der Ausgangskondensatoren der Stromversorgung und der Größe des Lastromes Ia abhängt. In diesem Zeitpunkt t2 schaltet die erfindungsgemäße Puffervorrichtung die Batterie BATT zu. In Folge dessen steigt Ua von Uamin bis auf einen Wert Ub - dU im Zeitpunkt t3, wobei Ub die Leerlaufspannung der Batterie und dU den Spannungsabfall über einem die Batterie aktivierenden Schalter bedeutet. Auf Grund der Belastung fällt die Batteriespannung ab t3 geringfügig unter den Leerlaufwert Ub. Parallel dazu wird im Zeitpunkt t2 ein Pufferzeitraum tm generiert.

Nach Ablauf von tm im Zeitpunkt t4 wird die Batterie zwangsweise abgeschaltet und es schließt sich ein weiterer Pufferzeitraum ts2 an, innerhalb dem die Ausgangsgleichspannung Ua erneut bis auf Uamin sinkt. In diesem Zeitpunkt t5 wird die Batterie wieder zugeschaltet, es wird ein weiterer, bis t7 dauernder Pufferzeitraum tm generiert und Ua steigt erneut bis auf den Wert Ub - dU im Zeitpunkt t6. Diese Sequenz wiederholt sich, solang die Netzspannung Un nicht wiederkehrt.

Im Zeitpunkt t8 erfolgt Wiederkehr der Netzspannung Un. Mit Beendigung des in diesem Zeitpunkt t8 ablaufenden aktuellen Pufferzeitraumes tm im Zeitpunkt t9 erfolgt automatisch die dauerhafte Abschaltung der Batterie. Die Ausgangsgleichspannung Ua fällt bis auf Uanenn im Zeitpunkt t10. Ab diesem Zeitpunkt übernimmt die Stromversorgung die weitere Speisung der Last, und der Regler der Stromversorgung hält Ua möglichst auf dem Wert Uanenn konstant. Die Batterie bleibt abgeschaltet, da die Ausgangsgleichspannung nicht mehr bis auf den vorgegebenen Minimalwert Uamin abfällt.

Es kann insbesondere bei einem lange andauernden Ausfall der Stromversorgung der Sonderfall eintreten, daß die Batterie so weit entladen wird und der mit der Batteriespannung Ub übereinstimmende Istwert der Gleichspannung Ua während eines der vielen folgenden Pufferzeiträume tm den Minimalwert Uamin nicht mehr überschreitet. In diesem Fall ist es vorteilhaft, wenn von der Steuereinheit CU keine Pufferzeiträume tm mehr generiert werden und die Pufferbatterie folglich nicht mehr abgeschaltet wird, wenn nach deren Zuschaltung der Istwert der Gleichspannung Ua kleiner als der vorgegebene Minimalwert Uamin bleibt. Vorteilhaft wird die Pufferbatterie BATT von einer separaten Logik in der Steuereinheit CU dann wieder abgeschaltet, wenn keine Pufferzeiträume tm mehr generiert worden sind und der Istwert der Gleichspannung Ua wieder größer als der vorgegebene Minimalwert Uamin geworden ist.

Die Belastung der Batterie während der Pufferzeiten tm bewirkt eine allmähliche Entladung derselben. Deren Leerlaufspannung Ub und der Wert der sich während der Pufferzeiträume einstellenden Ausgangsgleichspannung Ua = Ub - dU sinkt langsam. Dieser Vorgang ist aus Gründen der Übersicht in den Figuren 2a, 2b, 3a, 3b, 3c nicht darstellbar.

In mit den Figuren 2a und 2b vergleichbarer Weise sind schließlich in den Figuren 3a bis 3c die Verläufe der wesentlichen Spannungen der erfindungsgemäße Vorrichtung während eines Puffervorgangs am Beispiel einer Stromversorgung gezeigt, welche entsprechend dem obigen zweiten Typ einen Speicherkondensator zur Hilfsspannungsversorgung für den Hochlauf des Reglers der Ausgangsgleichspannung aufweist.

Dabei entspricht der Ablauf in den Figuren 3a und 3b bis einschließlich des Zeitpunktes t8 denen der Figuren 2a und 2b. Zusätzlich ist die Figur 3c enthalten, welche den Verlauf einer Hilfsspannung Uh zeigt, die zur Speisung eines Reglers in der Stromversorgung dient.

Vom Zeitpunkt t8 an, welcher z.B. die Wiederkehr einer die Stromversorgung speisenden Netzspannung bzw. die Beendigung einer die Stromversorgung blockierenden Bedingung kennzeichnet, steigt die Hilfsspannung Uh von 0 bis auf einen Schwellwert Ustart. Dies wird durch Aufladung eines Speicherkondensators über einen Widerstand in der Stromversorgung bewirkt. Bei dessen Erreichung im Zeitpunkt t9 beginnt der Regler der Stromversorgung zu arbeiten. An dem in t9 von Fig.3c bis nach 3a hinaufgezogenen und in punktierter Linie dargestellten Pfeil ist zu erkennen, daß gerade eine Pufferzeit tm aktiv ist. Da im Zeitpunkt t9 die Ausgangsgleichspannung Ua bedingt durch die unveränderte Zuschaltung der Batterie noch größer als Uanenn ist, entlädt der Regler den Speicherkondensator zwar, aber die Stromversorgung kann nicht hochlaufen. Bei Uh = Ustop im Zeitpunkt tll wird der Regler angehalten und die Aufladung des Speicherkondensators beginnt erneut. Dies hat seine Ursache darin, daß in diesem Moment tll die Ausgangsgleichspannung Ua immer noch größer als Uanenn ist, obwohl im davor liegenden Zeitpunkt t9 der Pufferzeitraum tm ablief, die Batterie weggeschaltet wurde und als Folge davon Ua abfällt.

Die Sequenzen "Start/Ablauf von Pufferzeiträumen tm" und die damit verbundene Zu-/Abschaltung der Batterie und "Regler Start/Stop" verlaufen nach Wiederkehr der Netzspannung Un zunächst asynchron zueinander. Dies ist in den Figuren 3b und 3c durch die Zeitpunkte t12, t13 und darauf folgende doppelte Wellenlinien angedeutet. Die Asynchronität wird erst dann beendet, wenn die Bedingungen " Regler arbeitet " und Uamin < Ua < Uanenn zusammentreffen. Dies ist im Beispiel der Figuren 3b und 3c im Zeitpunkt t15 der Fall. Da nun Ua < Uanenn ist, hat der Regler quasi "Regelbedarf" und läuft weiter. Als Folge davon fällt die Ausgangsgleichspannung Ua nicht mehr weiter bis auf Uamin, sondern wird getrieben von der wiedergekehrten Netzspannung Un bis auf Uanenn im Zeitpunkt t16 erhöht. Die Batterie wird somit nicht mehr zugeschaltet, da Uamin nicht mehr unterschritten werden kann. Gleichzeitig überschreitet die Hilfsspannung Uh des Reglers ab t15 die obere Schwelle Ustart, bis der Speicherkondensator vollständig aufgeladen ist.

In der Praxis hat sich gezeigt, daß im Mittel nach Ablauf von ca. 5 Pufferzeiträumen tm nach Wiederkehr der Netzspannung bzw. nach Auflösung einer den Betrieb der Stromversorgung unterbrechenden Bedingung, im Beispiel der Figur 3c im Zeitpunkt t8, die Stromversorgung hochläuft und die Batterie abgeschaltet bleibt.

Vorteilhaft wird die Pufferbatterie BATT bezüglich Leerlaufspannung Ub und Kapazität so ausgewählt ist, daß die Batteriespannung Ub = Ua während eines Pufferzeitraumes tm bei Vorliegen eines annähernd im Bereich des Nennwertes liegenden Laststromes Ia nur auf einen, bevorzugt deutlich oberhalb des Nennwertes Uanenn der Gleichspannung Ua liegenden Spannungswert entladen wird. In der Praxis kann diese Bedingung erfüllt werden, wenn bei Uanenn = 24 V die Leerlaufspannung Ub der Batterie BATT einen Wert von mindestens 27 V aufweist.

## Patentansprüche

1. Vorrichtung zur Pufferung der Gleichspannung (Ua) am Ausgang einer netzbetriebenen Stromversorgung (SV), mit
a) mindestens einer Pufferbatterie (BATT), insbesondere einem über die Stromversorgung (SV) aufladbaren Akkumulator, und
b) einer Steuereinheit (CU), welche
b1) die Pufferbatterie (BATT) zuschaltet, wenn der Istwert der Gleichspannung (Ua) kleiner als ein vorgegebener Minimalwert (Uamin) ist, und
b2) einen vorgegebenen Pufferzeitraum (tm) generiert und die Pufferbatterie (BATT) nach dessen Ablauf zyklisch wieder abschaltet.

2. Vorrichtung nach Anspruch 1, wobei von der Steuereinheit (CU) keine Pufferzeiträume (tm) mehr generiert werden und die Pufferbatterie (BATT) nicht mehr abgeschaltet wird, wenn nach deren Zuschaltung der Istwert der Gleichspannung (Ua) kleiner als der vorgegebene Minimalwert (Uamin) ist.

3. Vorrichtung nach Anspruch 2, wobei die Pufferbatterie (BATT) von der Steuereinheit (CU) wieder abgeschaltet wird, wenn keine Pufferzeiträume (tm) mehr generiert werden und der Istwert der Gleichspannung (Ua) größer als der vorgegebene Minimalwert (Uamin) ist.

4. Vorrichtung nach einem der vorangegangenen Ansprüche, wobei die Leerlaufspannung (Ub) der Pufferbatterie (BATT) größer als der Nennwert (Uanenn) der Gleichspannung (Ua) ist.

5. Vorrichtung nach Anspruch 4, wobei die Pufferbatterie (BATT) bezüglich Leerlaufspannung (Ub) und Kapazität so ausgewählt ist, daß diese während eines Pufferzeitraumes (tm) bei Vorliegen eines annähernd im Bereich des Nennwertes liegenden Laststromes nur auf einen oberhalb des Nennwertes (Uanenn) der Gleichspannung (Ua) liegenden Spannungswert entladen wird.

6. Vorrichtung nach einem der vorangegangenen Ansprüche, wobei die netzbetriebenen Stromversorgung (SV) einen Kondensator am Gleichspannungsausgang (DC) aufweist, und der Kondensator während eines Pufferzeitraumes (tm) von der Pufferbatterie (BATT) aufgeladen wird.

## Claims

1. Apparatus for buffering the DC voltage (Ua) at the output of a mains-powered power supply (SV), having
a) at least one buffer battery (BATT), in particular a rechargeable battery which can be charged via the power supply (SV), and
b) a control unit (CU) which
b1)connects the buffer battery (BATT) when the actual value of the DC voltage (Ua) is less than a predetermined minimum value (Uamin), and
b2)generates a predetermined buffer time period (tm) and disconnects the buffer battery (BATT) again, cyclically, after this time period has elapsed.

2. Apparatus according to Claim 1, buffer time periods (tm) no longer being generated by the control unit (CU), and the buffer battery (BATT) no longer being disconnected when, after it has been connected, the actual value of the DC voltage (Ua) is less than the predetermined minimum value (Uamin).

3. Apparatus according to Claim 2, the buffer battery (BATT) being disconnected by the control unit (CU) again when buffer time periods (tm) are no longer being generated and the actual value of the DC voltage (Ua) is greater than the predetermined minimum value (Uamin).

4. Apparatus according to one of the preceding claims, the no-load voltage (Ub) of the buffer battery (BATT) being greater than the nominal value (Uanom) of the DC voltage (Ua).

5. Apparatus according to Claim 4, the no-load voltage (Ub) and capacity of the buffer battery (BATT) being selected such that said buffer battery (BATT) is discharged, during a buffer time period (tm) when a load current is present which is approximately in the region of the nominal value, only to a voltage value which is above the nominal value (Uanom) of the DC voltage (Ua).

6. Apparatus according to one of the preceding claims, the mains-powered power supply (SV) having a capacitor at the DC voltage output (DC), and the capacitor being charged by the buffer battery (BATT) during a buffer time period (tm).

## Revendications

1. Dispositif pour l'accumulation en tampon de la tension continue (Ua) à la sortie d'une alimentation en courant (SV) fonctionnant sur le réseau, comportant
a) au moins une batterie tampon (BATT), notamment un accumulateur chargeable par l'intermédiaire de l'alimentation en courant (SV), et
b) une unité de commande (CU)
b1) qui branche la batterie tampon (BATT) si la valeur réelle de la tension continue (Ua) est inférieure à une valeur minimale prescrite (Uamin), et
b2) qui génère un intervalle de temps tampon prescrit (tm) et qui coupe de nouveau de façon cyclique la batterie tampon (BATT) après l'écoulement de cet intervalle de temps.

2. Dispositif selon la revendication 1, dans lequel l'unité de commande (CU) ne génère plus d'intervalle de temps tampon (tm) et ne coupe plus la batterie tampon (BATT) si, après le branchement de celle-ci, la valeur réelle de la tension continue (Ua) est inférieure à la valeur minimale prescrite (Uamin).

3. Dispositif selon la revendication 2, dans lequel la batterie tampon (BATT) est de nouveau coupée par l'unité de commande (CU) si aucun intervalle de temps tampon n'est plus généré (tm) et si la valeur réelle de la tension continue (Ua) est supérieure à la valeur minimale prescrite (Uamin).

4. Dispositif selon l'une des revendications précédentes, dans lequel la tension à vide (Ub) de la batterie tampon (BATT) est supérieure à la tension nominale (Uanenn) de la tension continue (Ua).

5. Dispositif selon la revendication 4, dans lequel la batterie tampon (BATT) est choisie quant à sa tension à vide (Ub) et quant à sa capacité de telle sorte que, pendant un intervalle de temps tampon (tm) en présence d'un courant de charge se trouvant approximativement dans le domaine de la valeur nominale, elle se décharge seulement à une valeur de tension se trouvant au-dessus de la valeur nominale (Uanenn) de la tension continue (Ua).

6. Dispositif selon l'une des revendications précédentes, dans lequel l'alimentation en courant (SV) fonctionnant sur le réseau comporte un condensateur de stockage à la sortie de tension continue (DC) et le condensateur est chargé pendant un intervalle de temps tampon (tm) par la batterie tampon (BATT).
